# EUROPÄISCHE PATENTSCHRIFT

(11) **EP 3 525 223 B1**
(45) Veröffentlichungstag und Bekanntmachung des Hinweises auf die Patenterteilung: **07.10.2020**
(21) Anmeldenummer: 19154101.0
(22) Anmeldetag: 29.01.2019
(51) Int. Cl.: H01H 39/00, B60L 3/04, H01H 31/00

(54) **PYROTECHNISCHER SCHALTER**
PYROTECHNIC SWITCH
COMMUTATEUR PYROTECHNIQUE

(30) Priorität: 08.02.2018 DE 102018201995
(43) Veröffentlichungstag der Anmeldung: 14.08.2019
(73) Patentinhaber: Volkswagen AG, 38440 Wolfsburg (DE)
(72) Erfinder: Deyda, Andreas, 38173 Erkerode (DE)
(74) Vertreter: Zucker, Volker

(56) Entgegenhaltungen:
- WO-A1-97/41582
- US-A1- 2006 049 027
- US-A1- 2010 328 014
- US-A1- 2014 061 161

## Beschreibung

Die Erfindung betrifft einen pyrotechnischen Schalter.

Pyrotechnische Schalter dienen häufig dazu, in einem Ereignisfall eine elektrische Verbindung zu trennen, beispielsweise in einem Crashfall eine Batterie vom Bordnetz zu trennen. Hierdurch soll beispielsweise die Gefahr von Kurzschlüssen vermieden werden, die eine Brandgefahr darstellen. Üblicherweise weisen pyrotechnische Schalter einen Zünder und ein Trennelement auf, wobei bei Auslösung des Zünders im aktivierten Zustand das Trennelement bewegt wird und eine Stromschiene durchtrennt. Der Vorteil derartiger pyrotechnischer Schalter ist deren große Auslösegeschwindigkeit.

Ein solcher pyrotechnischer Schalter ist beispielsweise aus der DE 10 2016 107 707 B3 bekannt.

Aus der US 2006/0049027 A1 ist ein pyrotechnischer Schalter bekannt, umfassend einen Zünder, ein Trennelement und eine Stromschiene, wobei an der Stromschiene ein erster Anschuss und ein zweiter Anschluss angeordnet sind, wobei der pyrotechnische Schalter mindestens einen dritten Anschluss mit einer Leitung aufweist. Der pyrotechnische Schalter ist weiter derart ausgebildet, dass im aktivierten Zustand der zweite Anschluss elektrisch mit dem dritten Anschluss verbunden ist. Dabei ist ein Kontaktelement vorgesehen, das derart ausgebildet ist, die Leitung des dritten Anschlusses elektrisch zu kontaktieren. Dabei sind die Kontaktelemente als integraler Bestandteil der Stromschiene ausgebildet.

Aus der US 2010/0328014 A1 ist ein pyrotechnischer Schalter bekannt, umfassend einen Zünder, ein Trennelement und eine Leitung, wobei an der Leitung ein erster Anschluss und ein zweiter Anschluss angeordnet sind, wobei der pyrotechnische Schalter derart ausgebildet ist, dass im aktivierten Zustand das Trennelement die Leitung durchtrennt. Dabei ist das Trennelement zweiteilig ausgebildet und weist einen elektrisch leitenden Teil und einen isolierenden Teil auf. Über den elektrisch leitenden Teil wird der zweite Anschluss mit einem dritten Anschluss verbunden, wohingegen der isolierende Teil den ersten und zweiten Anschluss elektrisch trennt.

Der Erfindung liegt das technische Problem zugrunde, einen pyrotechnischen Schalter zu verbessern.

Die Lösung des technischen Problems ergibt sich durch einen pyrotechnischen Schalter mit den Merkmalen des Anspruchs 1. Weitere vorteilhafte Ausgestaltungen der Erfindung ergeben sich aus den Unteransprüchen.

Hierzu umfasst der pyrotechnische Schalter einen Zünder, ein Trennelement und eine Stromschiene, wobei an der Stromschiene ein erster Anschluss und ein zweiter Anschluss angeordnet ist. Dabei ist der pyrotechnische Schalter derart ausgebildet, dass im aktivierten Zustand das Trennelement die Stromschiene durchtrennt. Der pyrotechnische Schalter weist weiter mindestens einen dritten Anschluss mit einer Leitung auf, wobei der pyrotechnische Schalter derart ausgebildet ist, dass im aktivierten Zustand der zweite Anschluss elektrisch mit dem mindestens einen dritten Anschluss verbunden ist. Hierdurch ist es möglich, nicht nur eine elektrische Verbindung zu trennen, sondern auch zusätzlich eine neue elektrische Verbindung herzustellen. Dabei wird vorzugsweise zunächst die elektrische Verbindung über die Stromschiene zwischen dem ersten und dem zweiten Anschluss getrennt, bevor die neue elektrische Verbindung zwischen dem zweiten und dem dritten Anschluss hergestellt wird. So kann beispielsweise der erste Anschluss mit einer Batterie und der zweite Anschluss mit einem Bordnetz verbunden sein, wobei der dritte Anschluss mit Masse verbunden ist. Wird nun die Stromschiene beispielsweise bei einem Crash durch das Trennelement getrennt, so kann es aufgrund von Kapazitäten zu Restenergien im Bordnetz kommen. Diese Restenergien können nun schnell und zuverlässig durch die neu hergestellte elektrische Verbindung zwischen dem zweiten Anschluss und dem dritten Anschluss abgeführt werden.

Dabei erfolgt die elektrische Kontaktierung der Leitung des dritten Anschlusses mittels eines Kontaktelements, das nagelförmig ausgebildet ist.

In einer Ausführungsform ist das Kontaktelement an der Stromschiene angeordnet, wobei der pyrotechnische Schalter derart ausgebildet ist, dass bei der Aktivierung ein Teil der Stromschiene mit dem Kontaktelement in Richtung des Leiters des dritten Anschlusses bewegt wird.

In einer alternativen Ausführungsform ist das Kontaktelement an dem Trennelement angeordnet, wobei der pyrotechnische Schalter derart ausgebildet ist, dass im aktivierten Zustand das Trennelement die Stromschiene durchtrennt und das Kontaktelement einen dem zweiten Anschluss zugeordneten Teil der Stromschiene und die Leitung des dritten Anschlusses kontaktiert.

Der Vorteil des Kontaktelementes ist, dass dadurch gewisse Toleranzen bei der Bewegung des Trennelements und bei der Durchtrennung der Stromschiene leichter ausgeglichen werden können, wobei jedoch ein weiteres Bauteil benötigt wird.

Die Erfindung wird nachfolgend anhand bevorzugter Ausführungsbeispiele näher erläutert. Die Figuren zeigen:
- Fig. 1: eine schematische Darstellung eines pyrotechnischen Schalters in einer ersten Ausführungsform im Normalzustand,
- Fig. 2: eine schematische Darstellung eines pyrotechnischen Schalters im aktivierten Zustand,
- Fig. 3: eine schematische Darstellung eines pyrotechnischen Schalters in einer zweiten nicht-anspruchsgemäßen Ausführungsform im aktivierten Zustand,
- Fig. 4: eine schematische Darstellung eines pyrotechnischen Schalters im Normalzustand (Stand der Technik) und
- Fig. 5: eine schematische Darstellung eines pyrotechnischen Schalters im aktivierten Zustand (Stand der Technik).

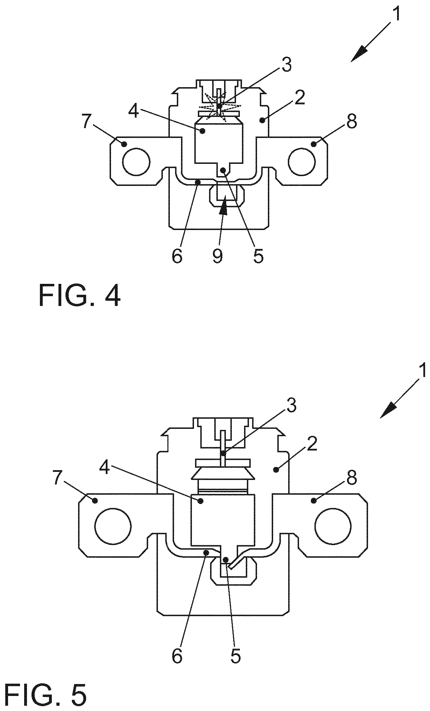

Bevor die Erfindung näher erläutert wird, soll zunächst anhand der Fig. 4 und Fig. 5 der Stand der Technik näher erläutert werden. Fig. 4 zeigt einen pyrotechnischen Schalter 1 im Normalzustand. Der pyrotechnische Schalter 1 weist ein Gehäuse 2, einen Zünder 3 und ein Trennelement 4 auf. Das Trennelement 4 ist mit einer Nase bzw. einem Trennmeißel 5 ausgebildet, der aus einem elektrisch nicht-leitenden Material (z.B. Kunststoff) ausgebildet ist. Weiter weist der pyrotechnische Schalter 1 eine Stromschiene 6 auf, an deren einem Ende ein erster Anschluss 7 und an deren anderem Ende ein zweiter Anschluss 8 angeordnet ist. Die Stromschiene 6 kann dabei derart ausgebildet sein, dass diese in einem Trennbereich 9 eine Solltrennstelle aufweist. Soll nun der Stromfluss zwischen dem ersten Anschluss 7 und dem zweiten Anschluss 8 unterbrochen werden, so erhält der Zünder 3 ein Zündsignal und eine Treibladung wird gezündet. Aufgrund der Ausdehnung eines Gases kommt es zu einer Bewegung des Trennelements 4 in Richtung Stromschiene 6 und der Trennmeißel 5 durchtrennt die Stromschiene 6, was in Fig. 5 dargestellt ist. Dies stellt den aktivierten Zustand dar.

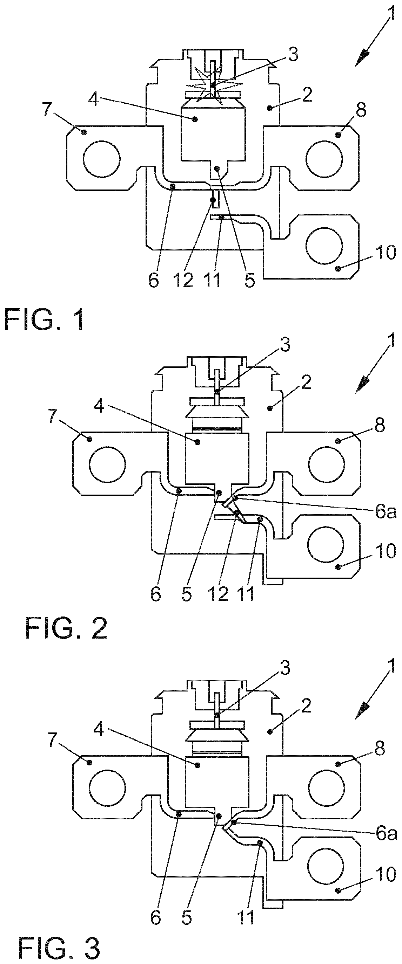

In der Fig. 1 ist nun ein erfindungsgemäßer pyrotechnischer Schalter 1 im Normalzustand dargestellt, wobei gleiche Elemente mit gleichen Bezugszeichen versehen sind. Der pyrotechnische Schalter 1 weist zusätzlich einen dritten Anschluss 10 mit einer Leitung 11 auf. Die Leitung 11 kann dabei auch als Schiene ausgebildet sein. Weiter weist der pyrotechnische Schalter 1 ein Kontaktelement 12 auf, das an der Unterseite der Stromschiene 6 angeordnet ist. Das Kontaktelement 12 kann dabei ein separates Element sein oder aber aus der Stromschiene 6 ausgeformt sein. Wird nun der pyrotechnische Schalter 1 aktiviert, so bewegt sich wieder das Trennelement 4 in Richtung der Stromschiene 6. Dabei durchtrennt der Trennmeißel 5 wieder die Stromschiene 6. Zusätzlich wird ein dem zweiten Anschluss 8 zugeordneter Teil 6a der Stromschiene 6 mit dem Kontaktelement 12 in Richtung der Leitung 11 des dritten Anschlusses 10 bewegt. Dabei kommt es zu einem elektrischen Kontakt zwischen dem Kontaktelement 12 und der Leitung 11, sodass im Ergebnis der zweite Anschluss 8 und der dritte Anschluss 10 miteinander elektrisch verbunden sind. Ein bevorzugter Anwendungsfall ist dabei die Trennung eines Bordnetzes von einer Spannungsquelle wie beispielsweise einer Batterie. Die Spannungsquelle kann dabei beispielsweise eine Spannung von 48 V oder größer aufweisen. Dabei wird die Spannungsquelle an den ersten Anschluss 7 angeschlossen und das Bordnetz mit seinen Bordnetzverbrauchern an den zweiten Anschluss 8 angeschlossen. An den dritten Anschluss 10 wird Masse angeschlossen. Im Crashfall oder einem anderen Ergebnis, wo die Spannungsquelle abgetrennt werden soll, wird die Stromschiene 6 durchtrennt. Durch die hergestellte Masseverbindung über den dritten Anschluss 10 können dann Restladungen im Bordnetz abfließen. Dabei ist sichergestellt, dass zunächst die Verbindung zur Spannungsquelle getrennt wird, bevor die Verbindung nach Masse hergestellt wird.

Alternativ kann das Kontaktelement 12 auch am Trennelement 4 angeordnet sein. Hierzu durchbohrt beispielsweise das Kontaktelement 12 sowohl den Teil 6a der Stromschiene 6 als auch die Leitung 11, um so den elektrischen Kontakt herzustellen.

In der Fig. 3 ist eine weitere alternative Ausführungsform im aktivierten Zustand dargestellt. Bei dieser Ausführungsform wird auf ein separates Kontaktelement 12 verzichtet. Dafür wird der Teil 6a der Stromschiene 6 derart in Richtung der Leitung 11 bewegt, dass es zu einem direkten Kontakt zwischen dem Teil 6a der Stromschiene 6 und der Leitung 11 kommt.

## Patentansprüche

1. Pyrotechnischer Schalter (1), umfassend einen Zünder (3), ein Trennelement (4) und eine Stromschiene (6), wobei an der Stromschiene (6) ein erster Anschluss (7) und ein zweiter Anschluss (8) angeordnet ist, wobei der pyrotechnische Schalter (1) derart ausgebildet ist, dass im aktivierten Zustand das Trennelement (4) die Stromschiene (6) durchtrennt,
wobei
der pyrotechnische Schalter (1) mindestens einen dritten Anschluss (10) mit einer Leitung (11) aufweist, wobei der pyrotechnische Schalter (1) derart ausgebildet ist, dass im aktivierten Zustand der zweite Anschluss (8) elektrisch mit dem dritten Anschluss (10) verbunden ist, wobei
ein Kontaktelement (12) vorgesehen ist, das derart ausgebildet ist, die Leitung (11) des dritten Anschlusses (10) elektrisch zu kontaktieren,
**dadurch gekennzeichnet, dass**
das Kontaktelement (12) nagelförmig ausgebildet ist.

2. Pyrotechnischer Schalter nach Anspruch 1, **dadurch gekennzeichnet, dass** das Kontaktelement (12) an der Stromschiene (6) angeordnet ist, wobei der pyrotechnische Schalter (1) derart ausgebildet ist, dass bei der Aktivierung ein Teil (6a) der Stromschiene (6) mit dem Kontaktelement (12) in Richtung des Leiters (11) des dritten Anschlusses (10) bewegt wird.

3. Pyrotechnischer Schalter nach Anspruch 1, **dadurch gekennzeichnet, dass** das Kontaktelement (12) an dem Trennelement (4) angeordnet ist, wobei der pyrotechnische Schalter (1) derart ausgebildet ist, dass im aktivierten Zustand das Trennelement (4) die Stromschiene (6) durchtrennt und das Kontaktelement (12) einen dem zweiten Anschluss (8) zugeordneten Teil (6a) der Stromschiene (6) und die Leitung (11) des dritten Anschlusses (10) kontaktiert.

## Claims

1. Pyrotechnic switch (1) comprising an igniter (3), a separating element (4), and a busbar (6), wherein a first connection (7) and a second connection (8) are arranged on the busbar (6), wherein the pyrotechnic switch (1) is designed such that, in the activated state, the separating element (4) disconnects the busbar (6), wherein
the pyrotechnic switch (1) has at least one third connection (10) with a line (11), wherein the pyrotechnic switch (1) is designed such that, in the activated state, the second connection (8) is electrically connected to the third connection (10), wherein
a contact element (12) is provided which is designed to electrically contact the line (11) of the third connection (10),
**characterized in that**
the contact element (12) is of a nail-shaped design.

2. Pyrotechnic switch according to Claim 1, **characterized in that** the contact element (12) is arranged on the busbar (6), wherein the pyrotechnic switch (1) is designed such that upon activation, a part (6a) of the busbar (6) is moved with the contact element (12) in the direction of the conductor (11) of the third connection (10).

3. Pyrotechnic switch according to Claim 1, **characterized in that** the contact element (12) is arranged on the separating element (4), wherein the pyrotechnic switch (1) is designed such that, in the activated state, the separating element (4) disconnects the busbar (6) and the contact element (12) contacts the line (11) of the third connection (10) and a part (6a) of the busbar (6) assigned to the second connection (8).

## Revendications

1. Commutateur pyrotechnique (1), comprenant un allumeur (3), un élément de séparation (4) et une barre omnibus (6), un premier raccordement (7) et un deuxième raccordement (8) étant disposés sur la barre omnibus (6), le commutateur pyrotechnique (1) étant conçu de telle sorte que, dans un état activé, l'élément de séparation (4) sectionne la barre omnibus (6),
le commutateur pyrotechnique (1) présentant au moins un troisième raccordement (10) comprenant un conducteur (11), le commutateur pyrotechnique (1) étant conçu de telle sorte que, dans l'état activé, le deuxième raccordement (8) est raccordé électriquement au troisième raccordement (10),
un élément de contact (12) étant prévu lequel est conçu de sorte à entrer en contact électrique avec le conducteur (11) du troisième raccordement (10),
**caractérisé en ce que**
l'élément de contact (12) est conçu sous la forme de clou.

2. Commutateur pyrotechnique selon la revendication 1, **caractérisé en ce que** l'élément de contact (12) est disposé sur la barre omnibus (6), le commutateur pyrotechnique (1) étant conçu de telle sorte que, lors de l'activation, une partie (6a) de la barre omnibus (6) est déplacée avec l'élément de contact (12) dans une direction du conducteur (11) du troisième raccordement (10).

3. Commutateur pyrotechnique selon la revendication 1, **caractérisé en ce que** l'élément de contact (12) est disposé sur l'élément de séparation (4), le commutateur pyrotechnique (1) étant conçu de telle sorte que, dans l'état activé, l'élément de séparation (4) sectionne la barre omnibus (6) et l'élément de contact (12) entre en contact avec une partie (6a) de la barre omnibus (6) affectée au deuxième raccordement (8) et avec le conducteur (11) du troisième raccordement (10).
